(19) Europäisches Patentamt

European Patent Office

Office européen des brevets

(11) **EP 3 449 208 B1**

(12) **FASCICULE DE BREVET EUROPEEN**

(45) Date de publication et mention de la délivrance du brevet:
**06.10.2021 Bulletin 2021/40**

(21) Numéro de dépôt: **17725315.0**

(22) Date de dépôt: **27.04.2017**

(51) Int Cl.:
**G01B 11/16** *(2006.01)*    **G01M 5/00** *(2006.01)*
**G01M 11/08** *(2006.01)*

(86) Numéro de dépôt international:
**PCT/FR2017/050995**

(87) Numéro de publication internationale:
**WO 2017/187090 (02.11.2017 Gazette 2017/44)**

(54) **DISPOSITIF DE MESURE DE DEFORMATIONS ENDOGENES**

VORRICHTUNG ZUR MESSUNG VON ENDOGENEN DEFORMATIONEN

DEVICE FOR MEASURING ENDOGENOUS DEFORMATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2016 FR 1653907**

(43) Date de publication de la demande:
**06.03.2019 Bulletin 2019/10**

(73) Titulaires:
• **Centre National de la Recherche Scientifique CNRS**
**75016 Paris (FR)**
• **Université de Nantes**
**44035 Nantes (FR)**

(72) Inventeurs:
• **CASARI, Pascal**
**44600 Saint-Nazaire (FR)**
• **LEKLOU, Nordine**
**44600 Saint-Nazaire (FR)**
• **POUZAINT, Yves**
**44800 Nantes (FR)**
• **ROSSETTI, Damaris**
**44600 Saint-Nazaire (FR)**

(74) Mandataire: **Plasseraud IP**
**66, rue de la Chaussée d'Antin**
**75440 Paris Cedex 09 (FR)**

(56) Documents cités:
**WO-A1-2014/140496    FR-A1- 2 996 634**
**US-B1- 6 696 974**

## Description

L'invention concerne un dispositif de mesure des déformations locales endogènes d'une structure lors d'une phase de solidification de ladite structure.

Les structures qui sont utilisées très couramment en architecture, dans les ouvrages de génie civil tels que les barrages, les centrales nucléaires, les ponts, les tunnels, etc., ainsi que généralement dans les domaines liés à la mécanique subissent généralement des contraintes mécaniques lors de leur construction et tout au long de leur durée de vie. L'exercice de ces contraintes provoque des déformations dans le volume de ces structures ce qui peut aboutir à altérer leurs caractéristiques mécaniques. Le retrait endogène, à savoir qui prend naissance à l'intérieur du corps de la structure, du matériau composant la structure est particulièrement problématique lors de la création de la structure, par exemple lors de la création d'une structure composée de matrices cimentaires à faible ratio eau/ciment, et constitue une cause de fissuration précoce du matériau. En effet, la dépression capillaire générée par l'auto-dessiccation peut atteindre des valeurs très élevées (plusieurs Mega-Pascals (MPa) selon Hua et al., 1995). Plusieurs études ont montré que le retrait endogène qui se développe pendant le premier jour de la phase de solidification représente une part très importante des déformations endogènes à long terme du matériau : au terme des premières vingt-quatre heures, la déformation endogène peut atteindre plus de 40% (Baroghel-Bouny et Kheirbek, 2001), voire, pour certains bétons à hautes performances, plus de 80% (Lee et al., 2003) de la déformation mesurée après une année de maturation en conditions endogènes.

**Les trois références complètes des publications susmentionnées sont listées ci-dessous** : Hua, C., Acker, P., & Ehrlacher, A. (1995). Analyses and models of the autogeneous shrinkage of hardening cement paste. Cernent and Concrete Research, 25, 1457-1468.

Baroghel-Bouny V., Kheirbek A., "Effect of mix parameters on autogenous deformations of cement paste - Microstructural interpretation", Concrete Science Engineering, vol. 3, n° 9, 2001, p. 23-38.

Lee H.K., Lee K.M. & Kim B.G., "Autogenous shrinkage of high-performance concrete containing fly ash", Magazine of Concrete Research, 2003, 55, N°6, December, 507-515*.*

Pour assurer un suivi des qualités de ces structures, il est nécessaire de pouvoir mesurer l'évolution des déformations qui se produisent dans ces structures lors des tous premiers jours, entre une journée et quatre jours et de préférence sur les trois premiers jours, du passage du matériau d'une phase liquide (pâteuse) à une phase solide.

L'évolution des déformations des structures et l'estimation des contraintes qui s'exercent sur celles-ci peuvent être suivies par des dispositifs placés sur la surface externe des structures tels que des témoins visuels pour les déformations ou des capteurs mécaniques sensibles à la déformation à la surface de ces structures (FR2855210). La mesure de la déformation à l'intérieur même de la structure peut être estimée en intégrant un capteur uniaxial ou « fibre de mesure » tel qu'une fibre optique dans le volume même de la structure (WO2006127034). Ces méthodes cependant ne permettent au mieux de n'estimer qu'une moyenne selon l'axe du capteur des composantes des contraintes ou des déformations s'exerçant dans une fibre placée dans le volume surveillé. Enfin, l'intégration directe dans la structure surveillée d'un capteur peut aboutir à des affaiblissements de ladite structure qui peuvent être dus à la modification de la distribution des contraintes dans le volume de la structure à proximité du capteur, la forme particulière même du capteur pouvant aboutir à des concentrations locales des contraintes propices à l'amorçage de fissure au voisinage de ce capteur. WO 2014/140496 A1 divulgue un dispositif de mesure de déformations comprenant une pluralité de corps d'épreuve et une seule fibre optique de mesure qui s'étend au travers des dits différents corps d'épreuve.

La présente invention vise à améliorer la qualité et la fiabilité de la mesure des déformations endogènes s'exerçant localement à l'intérieur d'une structure. En particulier, la présente invention vise à améliorer la qualité et la fiabilité de la mesure des déformations endogènes s'exerçant localement à l'intérieur d'une structure lors de la solidification de la structure.

A cet effet on prévoit un dispositif de mesure des déformations endogènes d'une structure lors du passage de ladite structure d'une phase liquide à une phase solide, le dispositif **étant tel que défini dans la revendication 1.**

En ce qui concerne les propriétés mécaniques du matériau de la structure elle-même, il peut s'agir de propriétés mécaniques théoriques en supposant le matériau sain.

On fait ici référence à la rigidité du corps d'épreuve mais on pourrait, de façon équivalente, faire référence au module de Young du matériau composant ledit corps d'épreuve.

On fait ici référence alternativement aux contraintes ou aux déformations, étant entendu que les deux grandeurs sont reliées par une loi de comportement mécanique.

En ce qui concerne les contraintes et les déformations endogènes déterminées, il s'agit bien des grandeurs qui seraient présentes dans la structure au niveau de la mesure, en l'absence du dispositif de mesure (i.e. si on n'avait pas remplacé le matériau constitutif de la structure à cet endroit par le corps d'épreuve), et par conséquent de ces mêmes grandeurs au voisinage du corps d'épreuve.

Ainsi, le dispositif de mesure est peu intrusif, peu onéreux et procure une grande facilité de mise en œuvre sur le terrain.

De plus, un dispositif de mesure simple permet de garantir un bon positionnement et une bonne orientation des mesures lors de l'insertion du dispositif de mesure dans le matériau.

En outre, des corps d'épreuve peu rigides permettent d'assurer le suivi de révolution de la rigidité du matériau tout au long de sa phase de durcissement.

Dans des modes de réalisation préférés de l'invention, on peut éventuellement avoir recours en outre à l'une et/ou à l'autre des dispositions suivantes :

- la fibre de mesure est une fibre optique de mesure ; Ainsi, les performances de la fibre de mesure sont améliorées : distances de transmission augmentées, résistance de la fibre de mesure à des environnements défavorables améliorée, possibilité de multiplexer plusieurs capteurs sur une même fibre de mesure ... ;
- l'au moins un corps d'épreuve comprend un canal s'étendant entre la première extrémité et la deuxième extrémité, au moins une partie de la fibre de mesure étant collée à l'intérieur dudit canal ; Ainsi les risques de flambage de la fibre de mesure sont annulés et la fibre de mesure est parfaitement solidaire du corps d'épreuve afin d'assurer des mesures précises ;
- le corps d'épreuve est surmoulé sur au moins une partie de la fibre de mesure; Ainsi les risques de flambage de la fibre de mesure sont annulés et la fibre de mesure est parfaitement solidaire du corps d'épreuve afin d'assurer des mesures précises ;
- l'au moins un corps d'épreuve comprend au moins un ergot s'étendant radialement par rapport audit corps d'épreuve entre une première extrémité solidaire dudit corps d'épreuve et une deuxième extrémité libre; Ainsi, le ou les corps d'épreuve sont bien solidaires de la structure ; plus particulièrement, l'agencement du ou des ergots permet d'améliorer la liaison entre le ou les corps d'épreuve et la structure et donc d'améliorer la précision des mesures ;
- la fibre de mesure est équipée d'une jauge extensiométrique, d'un réseau de Bragg ou d'une cavité Fabry-Pérot; Ainsi, le réseau de Bragg, la jauge extensiométrique ou de la cavité Fabry-Pérot , qui sont inscrits ou portés par la fibre de mesure, permettent de mesurer précisément les déplacements microscopiques subis par le corps d'épreuve (toute déformation de la structure étant transmise au réseau de Bragg, à la jauge extensiométrique ou à la cavité Fabry-Pérot, par l'intermédiaire du corps d'épreuve), une telle fibre équipée est également facile à mettre en place sur les corps d'épreuve;
- ledit dispositif comprend au moins trois corps d'épreuve disposés selon trois directions distincts, un premier corps d'épreuve s'étendant selon une première direction, un deuxième corps d'épreuve s'étendant selon une deuxième direction perpendiculaire à la première direction et un troisième corps d'épreuve s'étendant selon une troisième direction perpendiculaire à la première direction et à la deuxième direction ; ainsi le dispositif de mesure permet de mesurer directement les déformations subies dans trois directions choisies, améliorant ainsi la pertinence de ces mesures ;
- ledit dispositif comprend un quatrième corps d'épreuve s'étendant selon une quatrième direction appartenant à un premier plan comprenant la première direction et la deuxième direction,

    et/ou un cinquième corps d'épreuve s'étendant selon une cinquième direction appartenant à un deuxième plan comprenant la deuxième direction et la troisième direction, et/ou un sixième corps d'épreuve s'étendant selon une sixième direction appartenant à un troisième plan comprenant la première direction et la troisième direction ; En mécanique, on considère que l'espace comporte six dimensions, le dispositif de mesure permet ainsi de mesurer directement les déformations subies dans ces six dimensions ; chaque branche **du support est** reliée à au moins une autre branche et lesdites branches délimitent entre elles un espace intérieur de forme sensiblement cubique, la fibre de mesure est continue et passe à l'intérieur de chacune des branches, la forme particulière du support permet d'insérer l'ensemble des corps d'épreuve dans le matériaux tout en minimisant au mieux l'aspect intrusif de ces derniers afin de garantir des mesures fiables ;

- au moins trois branches parmi les branches du support comprennent respectivement le premier corps d'épreuve, le deuxième corps d'épreuve et le troisième corps d'épreuve ; ainsi la pertinence des mesures est améliorée ;
- au moins une des branches du support comprend le quatrième corps d'épreuve,

    et/ou dans lequel au moins une des branches du support comprend le cinquième corps d'épreuve, et/ou dans lequel au moins une des branches du support comprend le sixième corps d'épreuve, chacune des branches du support comprenant un unique corps d'épreuve au maximum ; ainsi la pertinence des mesures est améliorée ;

- au moins une branche parmi les branches du support est équipée d'une sonde de température portée par la fibre de mesure ; les changements de température lors du durcissement des matériaux sont des informations importantes qu'il est intéressant de d'obtenir afin d'améliorer la pertinence des mesures ;
- le support comprend au moins sept branches et dans lequel la fibre de mesure passant à l'intérieur de chacune desdites branches forme une boucle ; ainsi la fibre de mesure entre et sort au même niveau du support, minimisant au maximum l'aspect intrusif du dispositif de mesure.

L'invention porte également sur une structure mécanique comprenant un dispositif de mesure tel que décrit précédemment.

L'invention porte également sur un procédé de mesure des déformations endogènes d'une structure lors du passage de ladite structure d'une phase liquide à une phase solide, ledit procédé **étant tel que défini dans la revendication 15.**

Certains cas de réalisation présentent en outre les avantages décrits ci après.

Le dispositif de l'invention permet d'améliorer la fiabilité de la mesure en regroupant les moyens de mesure à l'intérieur d'une structure moins intrusive et moins onéreuse destinée à être intégrée à l'intérieur du matériau dont on souhaite suivre l'évolution ; et réalisée dans un matériau garantissant une bonne transmission des grandeurs mesurées vers le détecteur.

L'amélioration de la qualité de la mesure est liée à la connaissance locale précise des déformations dans un volume de mesure et donc nécessite la connaissance du tenseur des déformations en tout point de ce volume. Les composantes de ce tenseur de déformation peuvent être représentées par une matrice 3x3.

$$\begin{pmatrix} \varepsilon_{11} & \varepsilon_{12} & \varepsilon_{13} \\ \varepsilon_{21} & \varepsilon_{22} & \varepsilon_{23} \\ \varepsilon_{31} & \varepsilon_{32} & \varepsilon_{33} \end{pmatrix}$$

La symétrie de ce tenseur implique qu'il peut être entièrement déterminé à partir de 6 composantes indépendantes. Il est possible de mesurer ces déformations en plusieurs points et pour des directions données en disséminant de multiples capteurs uniaxiaux dans le volume de mesure. Selon un mode de réalisation, le dispositif de l'invention permet, en intégrant des capteurs de déformation dans des corps d'épreuve adaptés, de mesurer des valeurs reliées aux composantes du tenseur des déformations dans le volume du dispositif de l'invention, considéré comme petit devant celui de la structure.

Le dispositif de l'invention intégrant une pluralité de corps d'épreuve comprenant des capteurs permet alors d'y mesurer simultanément plusieurs valeurs liées au tenseur de déformation. Une estimation simultanée des 6 composantes indépendantes du tenseur des déformations devient possible en plaçant dans le support un minimum de 6 éléments de mesure orientés selon six directions de l'espace.

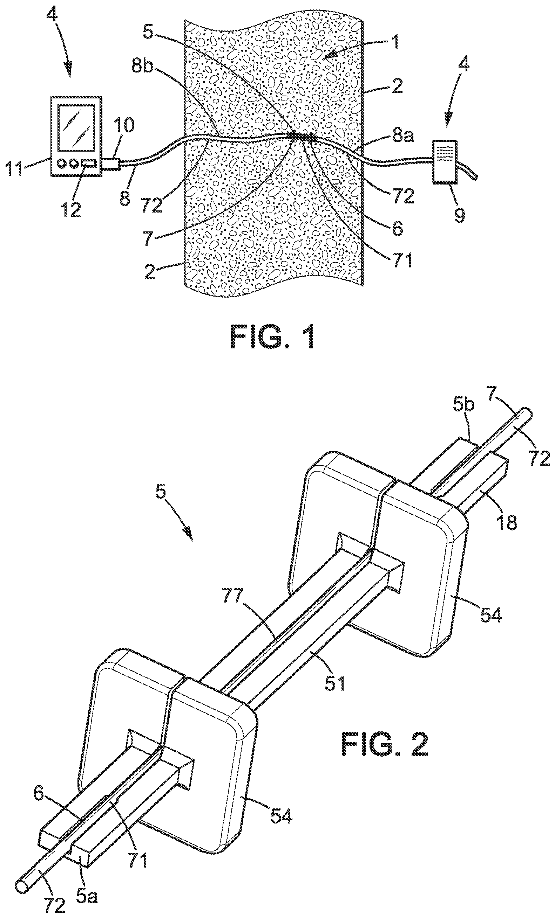

D'autres caractéristiques et avantages de l'invention apparaîtront au cours de la description suivante des formes de réalisation, données à titre d'exemple non limitatif, en regard des dessins joints. Les figures 1 et 2 montrent des modes de réalisation qui ne sont pas inclus dans l'étendue de la protection définie par les revendications.

Sur les dessins :

- la figure 1 est une vue d'un corps d'épreuve placé dans une partie de structure, une fibre optique de mesure étant placée dans un corps d'épreuve uniaxial relié à l'extérieur de la structure d'une part avec un moyen de stimulation de la fibre optique de mesure et d'autre part avec un moyen de transmission des signaux provenant de la fibre optique de mesure à un dispositif électronique apte à effectuer des calculs,
- La figure 2 présente un exemple d'un corps d'épreuve avec une fibre de mesure,
- la figure 3 est une vue en perspective d'un support de forme cubique comprenant quatorze branches dont deux sont équipées d'un corps d'épreuve avec une fibre de mesure,
- la figure 4 est une vue en perspective d'un support de forme cubique comprenant neuf branches dont six sont équipées d'un corps d'épreuve avec une fibre de mesure,
- la figure 5 est une vue représentant le support de la figure 4 placée dans une partie de structure, et
- les figures 6a et 6b sont des étapes d'installation du dispositif de mesure à l'intérieur de la structure.

Sur les différentes figures, les mêmes références désignent des éléments identiques ou similaires.

La figure 1 représente schématiquement une partie d'une structure 1, pour laquelle on souhaite déterminer une déformation d'origine mécanique. De préférence, on souhaite déterminer les déformations mécaniques subies par la structure 1 lors du très jeune âge de cette dernière. On appelle très jeune âge de la structure le temps écoulé entre le début et la fin de la phase de solidification de la structure 1. La structure 1 est par exemple une structure rigide, telle qu'une structure de génie civil, notamment constituée de béton, le cas échéant évidé et/ou renforcé par endroits. Dans le cas d'une structure 1 constituée de béton, la phase de solidification comprend l'étape de prise durant laquelle le mélange des constituants raidit et commence à acquérir sa résistance, et l'étape de durcissement dans lequel le matériau passe d'un état souple à l'état rigide et acquiert sa résistance.

Alternativement, la structure 1 peut être constituée de matières polymères telles qu'une résine qui va durcir en séchant au cours du temps.

La structure 1 reçoit au moins un corps d'épreuve 5 tel qu'il sera décrit plus loin en relation avec la figure 2. Par ailleurs, une zone d'instrumentation 4 peut être installée à l'extérieur de la structure 1. Dans l'exemple de la figure 1, on fournit deux zones d'instrumentation 4.

Le dispositif de mesure dont est équipée la structure de la figure 1 comprend un corps d'épreuve 5 placé dans une partie de la structure 1. Notamment, le pourtour extérieur 18 du corps d'épreuve 5 est fixé au pourtour intérieur de la structure 1, de manière à transmettre les déformations subies par la structure 1 au corps d'épreuve 5. Le corps d'épreuve 5 est fixé de manière intégrale sur la totalité de son pourtour extérieur 18 à la structure 1 (mis à part les endroits de raccordement à une fibre de mesure 7, comme expliqué ci-dessous).

Comme visible sur la figure 2, un corps d'épreuve 5 peut être uniaxial. Le corps d'épreuve 5 est constitué d'une seule pièce. Le corps d'épreuve 5 comprend un corps 51 continu s'étendant entre une première extrémité 5a et une deuxième extrémité 5b. Le corps d'épreuve 5 peut être réalisé en un matériau particulièrement adapté à la transmission des déformations depuis la structure 1 vers une fibre de mesure 7 (qui sera présentée ci-après). Il est de préférence homogène et ne présente pas de discontinuité. Le corps d'épreuve 5 peut être réalisé en plastique souple ou en tous autres matériaux souples afin de permettre de mesurer les déformations endogènes dès le commencement de la phase de solidification. En outre, cela permet de diminuer les risques de fragilisation de la structure 1 par formation de fissures. Le corps d'épreuve 5 présente par exemple une rigidité comprise entre 2 et 5 GigaPascals (GPa). La rigidité et les dimensions du corps d'épreuve 5 permettent de déterminer une raideur. La raideur mesurée est la raideur axiale du corps d'épreuve 5. Le critère de rigidité du corps d'épreuve 5 est important car les déformations de la structure 1 sont transmises audit corps d'épreuve 5 et ce dernier les transmet ensuite à la fibre de mesure 7. Une rigidité comprise entre 2 et 5 GPa permet au corps d'épreuve 5 de protéger la fibre de mesure 7 tout en maintenant un haut niveau de précision des mesures réalisées.

Par ailleurs, des critères supplémentaires de choix du matériau du corps d'épreuve 5 peuvent être liés à la durabilité, la toxicité ou le coût.

Le corps 51 du corps d'épreuve 5 peut être percé d'au moins un canal 6 qui s'étend longitudinalement entre la première extrémité 5a et la deuxième extrémité 5b du corps d'épreuve 5.

Optionnellement, le corps d'épreuve 5 comprend une joue 54 adaptée pour améliorer l'ancrage du corps d'épreuve à la structure 1. La joue 54 s'étend tout autour du corps 51 et peut présenter une forme sensiblement circulaire ou sensiblement carrée. Alternativement, le corps d'épreuve 5 peut comprendre une deuxième joue 54. Chacune des joues 42 est percée par le canal 6.

Optionnellement, le corps d'épreuve 5 peut comprendre un ergot 55 adapté pour améliorer l'ancrage du corps d'épreuve à la structure 1. L'ergot 55 s'étend radialement au corps 51 du corps d'épreuve 5 entre une première extrémité 55a solidaire du corps 51 et une deuxième extrémité 55b libre. L'ergot 55 peut être droit. Alternativement, l'ergot 55 peut présenter une forme curviligne. Optionnellement, la deuxième extrémité 55b peut présenter une forme de crochet.

Optionnellement, le corps d'épreuve 5 peut comprendre une pluralité d'ergots 55. La première extrémité 55a de chacun des ergots 55 est de préférence solidaire de la première extrémité 5a ou de la deuxième extrémité 5b du corps 51 du corps d'épreuve 5.

Le dispositif de mesure comprend une fibre de mesure 7, qui s'étend dans le canal 6. Plus particulièrement, une partie 71 de la fibre de mesure 7 s'étend dans le canal 6. De plus, l'au moins une partie 71 de la fibre de mesure 7 est fixée à l'intérieur du corps d'épreuve 5, de sorte que les déformations subies par le corps d'épreuve soient transmises à la fibre de mesure 7. Par exemple, l'au moins une partie 71 de la fibre de mesure 7 est collée à l'intérieur du canal 6. Alternativement, le corps d'épreuve 5 ne comprend pas de canal 6 et l'au moins une partie 71 de la fibre de mesure 7 est noyé à l'intérieur dudit corps d'épreuve 5, par exemple par surmoulage de la fibre de mesure 7 par le corps d'épreuve 5. Cette fixation peut, par exemple, être faite avec la fibre de mesure 7 légèrement pré-contrainte en traction quand le corps d'épreuve 5 est au repos afin que celle-ci reste en tension quelle que soit la sollicitation sur le corps d'épreuve 5. L'ensemble composé d'un corps d'épreuve 5 et de la fibre de mesure 7 présente par exemple une rigidité comprise entre 2 et 5 GigaPascals (GPa). La rigidité et les dimensions de l'ensemble composé d'un corps d'épreuve 5 et de la fibre de mesure 7 permettent de déterminer une raideur de l'ensemble. La raideur mesurée est la raideur axiale de l'ensemble. On entend par raideur axiale la raideur mesurée dans l'axe de la fibre de mesure 7 noyée dans le corps d'épreuve 5.

À titre d'exemple, on prévoit une fibre optique 8 continue qui s'étend depuis la zone d'instrumentation 4 à l'intérieur de la structure 1 jusqu'au canal 6, à l'intérieur du canal 6, à l'intérieur de la structure 1 jusque dans l'autre zone d'instrumentation 4. La fibre optique 8 est, par exemple, réalisée en silice. La fibre optique 8 peut être monomode ou multimode.

L'au moins une partie 71 de la fibre de mesure 7 solidaire du corps d'épreuve 5 s'étend de façon rectiligne à l'intérieur dudit corps d'épreuve 5, selon une direction d'axe donnée. Par contre, les parties 72 de la fibre de mesure 7 s'étendant entre les parois 2 de la structure 1 et le corps d'épreuve 5 s'étendent dans toute direction appropriée, notamment pour s'adapter à des canaux naturels de la structure 1.

On prévoit un dispositif de mesure instrumenté pour déterminer les contraintes ou les déformations dans la structure 1 au niveau du corps d'épreuve 5. Les caractéristiques optiques de l'au moins une partie 71 de la fibre de mesure 7 dans le corps d'épreuve 5 sont rendues dépendantes des déformations s'exerçant sur elle. L'au moins une partie 71 de la fibre de mesure 7 comprend par exemple une zone active 77, par exemple équidistante de la première extrémité 5a et de la deuxième extrémité 5b du corps d'épreuve 5. La zone active 77 peut être équidistante des deux joues 54 du corps d'épreuve 5.

La zone active 77 présente une caractéristique élasto-optique, c'est-à-dire que sa transmission optique dépend de sa tension selon l'axe de la fibre 7. Plus particulièrement, la zone active 77 peut être équipée d'une jauge optique. La jauge optique est un capteur de déformation mécanique à partir d'un signal interférométrique inclus dans la fibre optique 8 monomode.

La jauge optique peut être, par exemple, un réseau de Bragg susceptible de se déformer en fonction des contraintes mécaniques exercées sur la partie 71 de la fibre de mesure 7. Plus particulièrement, le réseau de Bragg est réalisé par une zone photo-inscrite sur la fibre de mesure 7 à l'intérieur de la zone active 77 et susceptible de se déformer en suivant les déformations d'origine mécanique exercées sur la partie 71 de la fibre de mesure 7.

Toute déformation de la structure 1 est transmise au réseau de Bragg par l'intermédiaire du corps d'épreuve 5. Ce réseau de Bragg modifie alors la lumière qu'il reçoit d'un dispositif de stimulation 9 approprié. Cette lumière retourne à un système d'acquisition 10 par l'intermédiaire de la fibre optique 8 et la déformation de la structure 1 est déterminée par un calculateur 11 à partir de la lumière ainsi modifiée.

Alternativement, la jauge optique équipant la zone active 77 peut être une jauge extensiométrique.

Alternativement, la jauge optique équipant la zone active 77 peut être une cavité Fabry-Pérot.

Optionnellement, l'ensemble composé du corps d'épreuve 5 et de la fibre de mesure 7 peut présenter une rigidité comprise entre 2 et 5 GigaPascals. La rigidité et les dimensions de l'ensemble permettent de déterminer une raideur de l'ensemble. La raideur mesurée est la raideur axiale de l'ensemble.

Bien que la présente description soit donnée principalement en référence au mode de réalisation d'une fibre de mesure optique, d'autres technologies de fibres de mesure sont envisageables dans le cadre de l'invention.

Le dispositif de mesure comprend également un système d'interrogation comprenant le dispositif de stimulation 9, adapté pour émettre un signal optique en direction de la fibre de mesure 7. Ce signal est transmis par l'intermédiaire de la partie 8a de la fibre optique 8 qui s'étend du dispositif de stimulation 9 au corps d'épreuve 5. Le dispositif de mesure comprend également le système d'acquisition 10, adapté pour détecter un signal optique provenant de la fibre de mesure 7. Ce signal est transmis par l'intermédiaire de la partie 8b de la fibre optique 8 qui s'étend du corps d'épreuve 5 au dispositif d'acquisition 10. L'utilisation de la fibre optique 8 limite très fortement la perte d'information et la fibre optique 8 est à l'épreuve des environnements électromagnétiques tels que la foudre, les câbles haute tension... Ainsi, il est possible de déporter de quelques kilomètres (jusqu'à 15 kilomètres) le dispositif d'acquisition 10.

Alternativement, un même système intégré peut réaliser à la fois la stimulation et l'acquisition. Ainsi, on ne détecte pas le signal optique transmis par la fibre optique 8, mais la réflexion de ce signal.

Le dispositif de mesure comprend également le calculateur 11. Le calculateur 11 est par exemple réalisé sur un circuit imprimé d'une machine programmable, tel qu'un ordinateur, ou autre, et est adapté pour traiter les signaux détectés par le système d'acquisition 10, comme cela sera décrit plus en détail ci-après.

Le calculateur 11 peut traiter des informations, telles que des données stockées dans une mémoire 12, correspondant à des signaux détectés par le dispositif d'acquisition 10, pour déterminer une déformation subie par la structure 1 au niveau de la partie 71 de la fibre de mesure 7. Si la partie 71 de la fibre de mesure 7 est fixée dans le corps d'épreuve 5, la déformation correspond à une déformation moyenne le long de l'axe de la partie 71 de la fibre de mesure 7.

Si les dimensions du corps d'épreuve 5 sont faibles par rapport à celles de la structure (ce qui sera classiquement le cas en génie civil, la dimension du corps d'épreuve 5 étant comprise par exemple entre environ 0,5 cm et 10 cm, et la dimension de la structure étant au moins égale au mètre, parfois supérieure à 10 voire à 100 mètres), on obtient une mesure locale à l'échelle de la structure 1.

Par ailleurs, le calculateur 11 est également adapté pour déterminer les déformations de retrait dans la structure 1 à l'emplacement de la partie 71 de la fibre de mesure 7, à partir de la déformation dans la fibre optique 8. Le calculateur 11 peut comprendre en mémoire une table comprenant les caractéristiques mécaniques du corps d'épreuve 5. Ces caractéristiques vont typiquement comprendre le ou les modules d'élasticité pour chacune des directions principales du matériau, voire le ou les coefficients de Poisson dans ce référentiel, le cas échéant en fonction de certains nombres de paramètres extérieurs (température, etc...). Les équations appropriées sont programmées dans le calculateur 11.

Dans cet exemple où on dispose d'une unique fibre de mesure dans le corps d'épreuve 5 uniaxial, la déformation mesurée peut être associée à l'état de tension (traction ou compression) moyen suivant la direction du corps d'épreuve 5.

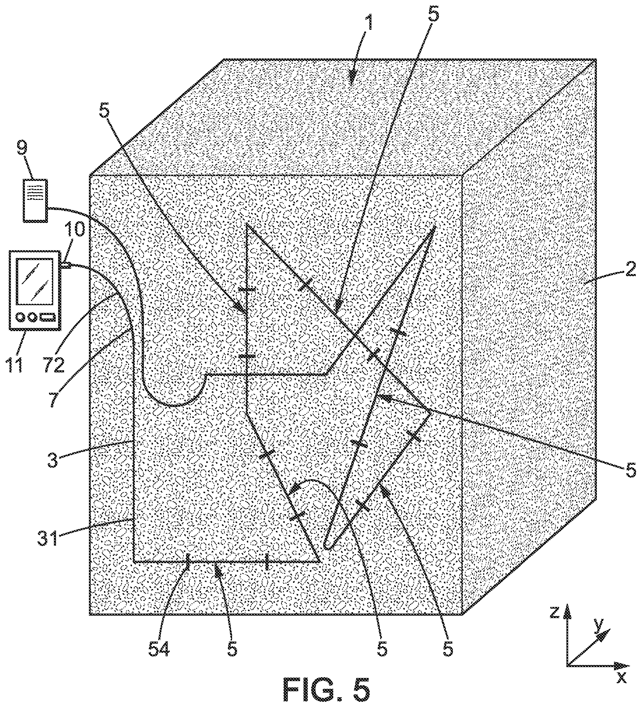

En mécanique, on considère que l'espace comporte six dimensions. Ce sont trois dimensions d'axe principal, ainsi que trois dimensions associées à des paires de ces axes. Ainsi, comme présenté à la figure 5, le dispositif de mesure peut comprendre une pluralité de corps d'épreuve 5 et de préférence six corps d'épreuve 5.

Le dispositif de mesure comprend en outre un support 3. Le support 3 est constitué d'une pluralité de branches 31 uniaxiales s'étendant entre une première extrémité 31a et une deuxième extrémité 31b. La distance entre la première extrémité 31a et la deuxième extrémité 31b d'une des branches 31 est par exemple comprise entre 10 et 100 millimètres et de préférence entre 20 et 60 millimètres. Chacune des branches 31 peut être sensiblement cylindrique et présenter, par exemple, un diamètre d'environ 4 à 12 millimètres. Chacune des branches 31 peut être réalisée en matériau souple, de préférence en matière plastique et pouvant présenter une rigidité comprise entre 2 et 5 GigaPascals. La surface de chacune des branches 31 présente alors des aspérités en saillies inclinées par rapport à l'axe de la branche ou des aspérités en creux afin de favoriser l'adhérence des branches 31 au sein de la structure 1.

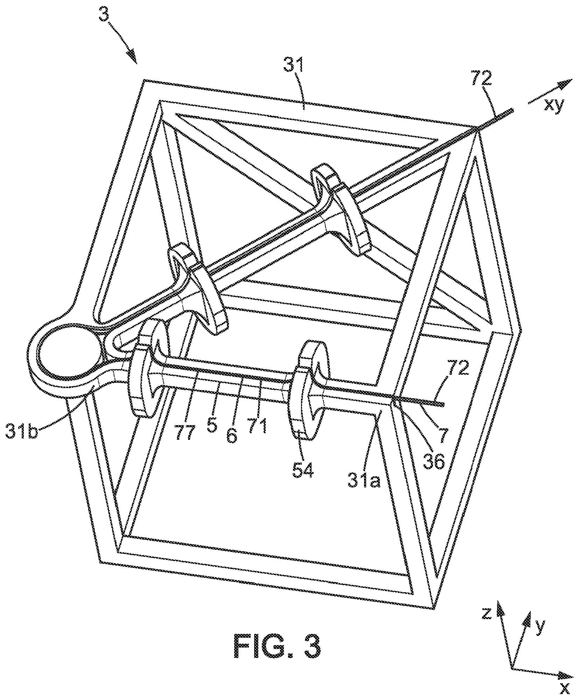

Chacune des branches 31 du support est reliée à au moins une autre des branches 31 du support 3 par l'une des premières et deuxièmes extrémités 31a et 31b. Comme visible sur la figure 3, la pluralité de branches 31 reliées entre elles donne au support 3 une forme générale de cube.

La forme cubique du support 3 permet en outre de minimiser le caractère intrusif du dispositif de mesure afin de ne pas créer de concentration de contraintes propres à entraîner une fissuration de la structure 1 et d'obtenir des mesures pertinentes. La forme cubique du support 3 permet en outre de faciliter l'inclusion du support 3 à l'intérieur de la structure 1 lors de l'étape de coulée de cette dernière afin de maitriser l'orientation du support 3.

Le support 3 comprend au minimum six branches 31 et au maximum quinze branches 31.

Au moins une des branches 31 du support 3 comprend un corps d'épreuve 5.

Optionnellement, au moins trois branches 31 parmi la pluralité de branches 31 du support 3, s'étendant selon des directions indépendantes, comprennent trois corps d'épreuve 5. Les trois branches 31 s'étendent respectivement selon une première direction X, selon une deuxième direction Y, perpendiculaire à la première direction X, et selon une troisième direction Z, perpendiculaire à la première direction X et à la deuxième direction Y. Chacune de ces trois branches 31 comprend au maximum un seul corps d'épreuve 5.

En réalisant 3 mesures indépendantes, on peut déterminer directement trois composantes du tenseur des déformations dans la structure 1 au niveau du support 3.

La somme de ces trois mesures est la trace du tenseur des déformations, qui donne accès au retrait volumique.

Optionnellement, au moins trois branches 31 supplémentaires parmi la pluralité de branches 31 du support 3 comprennent trois corps d'épreuve 5 supplémentaires. La structure comprend alors six corps d'épreuve 5. Les trois branches 31 supplémentaires s'étendent respectivement selon une quatrième direction XY, appartenant à un premier plan (X;Y) comprenant la première direction X et la deuxième direction Y, selon une cinquième direction YZ, appartenant à un deuxième plan (Y;Z) comprenant la deuxième direction Y et la troisième direction Z, et selon une sixième direction XZ, appartenant à un troisième plan (X;Z) comprenant la première direction et la troisième direction Z. Le support 3 comprenant ces six corps d'épreuve 5 est en trois dimensions.

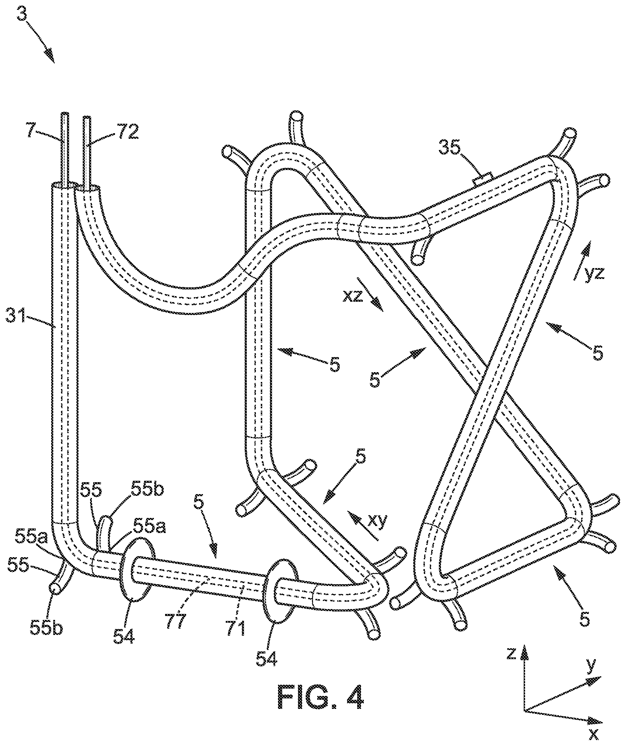

En réalisant six mesures indépendantes, tel que représenté sur la figure 4, on peut constituer six données qui permettent de déterminer les six composantes du tenseur des déformations dans la structure 1 à l'emplacement du support 3.

En outre, une des branches de la pluralité de branche 31 peut comprendre une sonde de température 35. La sonde de température 35 peut être portée par la fibre de mesure 7. Cette température peut être prise en compte dans une correction de la mesure liée à la sensibilité des capteurs de déformation (jauge extensiométrique, réseau de Bragg ou cavité Fabry-Pérot) à la température.

Chaque branche 31 peut être percée d'au moins un canal 36 qui s'étend longitudinalement entre la première extrémité 31a et la deuxième extrémité 31b de la branche 31. Lorsqu'une branche 31 est équipée d'un corps d'épreuve 5, le canal 36 de la branche 31 et le canal 6 du corps d'épreuve 5 sont au moins en partie confondus.

L'au moins une partie 71 de la fibre de mesure 7 s'étend dans le canal 36. L'au moins une partie 71 de la fibre de mesure 7 est fixée à l'intérieur de la pluralité de branches 31, de sorte que les déformations subies par chacune des branches 31 du support 3 soient transmises à la fibre de mesure 7. Par exemple, l'au moins une partie 71 de la fibre de mesure 7 est collée à l'intérieur du canal 36.

La fibre de mesure 7 est continue et passe à l'intérieur d'au moins une partie de l'ensemble des branches 31 du support 3 en formant une boucle comme visible sur la figure 5. Ainsi la portion de fibre de mesure 7 entrant dans le support 3 est en regard de la portion de fibre de mesure 7 sortant du support 3 afin de limiter au maximum le caractère intrusif du dispositif de mesure. L'utilisation de la fibre optique 8 permet de multiplexer la fibre de mesure 7, celle-ci comprend une pluralité de capteurs (réseaux de Bragg, jauge extensiométrique, cavité Fabry-Pérot, sonde de température, etc. placés le long de la fibre de mesure 7. La fibre de mesure 7 peut passer à l'intérieur de l'ensemble des branches 31 de la pluralité de branches 31 du support 3.

Dans l'exemple présenté à la figure 4, le support 3 comprend neuf branches 31, six corps d'épreuve 5 et une sonde de température 35.

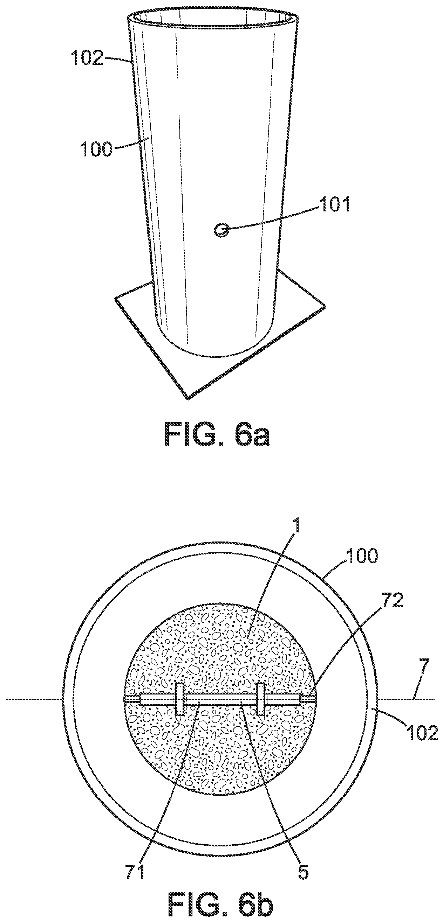

Ainsi, le dispositif de mesure qui vient d'être décrit peut être mis en place et utilisé de la manière suivante : Un moule 100, comprenant un ou deux évidements 101 sur sa paroi 102, est en partie rempli par le matériau constituant la structure 1 (figure 6a). Le matériau est à l'état liquide ou visqueux. Le support 3 est déposé dans le moule 100 sur la surface du matériau et orienté selon la direction souhaité (figure 6b). Les deux parties 72 de la fibre de mesure 7 sont passées au travers de l'un ou des deux évidements 101 et reliées respectivement à au dispositif de stimulation 9 et au système d'acquisition 10. Puis, le support 3 est noyé dans le matériau constituant la structure 1 sous forme liquide.

Dès le commencement de la phase de solidification, le dispositif de stimulation 9, par exemple de type LASER, émet un signal optique dans la fibre optique 8. Le signal optique est propagé le long de la fibre optique 8 et à travers la fibre de mesure 7, où il est modulé en fonction des déformations subies par la fibre de mesure 7. Le signal optique modulé est transmis le long de la fibre optique 8b jusqu'au système d'acquisition 10, où le signal est détecté, puis stocké dans la mémoire 12 du calculateur. Le calculateur traite les informations pour déterminer une déformation dans la structure 1 au niveau du support 3.

Cette interrogation peut être répétée au cours du temps, par exemple de manière périodique. Ainsi, le calculateur est capable de surveiller une évolution temporelle de la déformation endogène locale exercée dès le plus jeune âge de la structure 1. Le calculateur peut être couplé à des moyens d'alerte au cas où une comparaison des déformations détectées avec une déformation prédéterminée n'était pas jugée satisfaisante.

On peut ainsi réaliser une cartographie des tenseurs des déformations, et évidemment suivre l'évolution de ces déformations dans le temps durant ou après la prise de la structure 1, comme dans le cas d'un capteur localisé unique.

## Revendications

1. Dispositif de mesure des déformations endogènes d'une structure (1) lors du passage de ladite structure d'une phase liquide à une phase solide, le dispositif comprenant :

   - des corps d'épreuve (5) dont chacun est uniaxial et s'étend entre une première extrémité (5a) et une deuxième extrémité (5b), en étant adapté pour être noyé dans la structure (1) et constitué de matériau homogène souple aux propriétés mécaniques connues,

   **caractérisé par le fait que** le dispositif comprend:

   - un support (3) présentant une pluralité de branches (31) uniaxiales, chacun des corps d'épreuve (5) faisant partie d'une de ces branches (31) du support (3),
   - une fibre de mesure (7) de déformation attachée à l'intérieur des corps d'épreuve (5), de sorte que des déformations de chacun des corps d'épreuve (5) soient transmises à la fibre de mesure (7), ladite fibre de mesure (7) étant fixée à l'intérieur de la pluralité de branches (31) de sorte que les déformations subies par la pluralité de branches (31) soient transmises à ladite fibre de mesure (7), et

   - un système (9, 10, 11) relié à la fibre de mesure (7) et adapté pour détecter des signaux provenant de la fibre de mesure (7) représentatifs des déformations de la fibre de mesure (7) et pour déterminer les déformations endogènes à partir d'au moins un des signaux détectés et des propriétés mécaniques connues des matériaux du corps d'épreuve (5),

   chaque corps d'épreuve (5) présentant une rigidité comprise entre 2 et 5 GigaPascals, sachant que lesdites branches (31) présentent chacune une rigidité comprise entre 2 et 5 GigaPascals.

2. Dispositif selon la revendication 1, dans lequel la fibre de mesure (7) est une fibre optique de mesure.

3. Dispositif selon l'une quelconque des revendications 1 à 2, dans lequel il est prévu dans chaque corps d'épreuve (5) un corps (51) percé d'au moins un canal (6) qui s'étend longitudinalement entre la première extrémité (5a) et la deuxième extrémité (5b) du corps d'épreuve (5), au moins une partie de la fibre de mesure (7) étant collée à l'intérieur dudit canal.

4. Dispositif selon l'une quelconque des revendications 1 à 2, dans lequel le corps d'épreuve (5) est surmoulé sur au moins une partie de la fibre de mesure (7) .

5. Dispositif selon l'une quelconque des revendications 1 à 4, dans lequel l'au moins un corps d'épreuve (5) comprend au moins un ergot (55) s'étendant radialement par rapport audit corps d'épreuve entre une première extrémité (55a) solidaire dudit corps d'épreuve et une deuxième extrémité (55b) libre.

6. Dispositif selon l'une quelconque des revendications 1 à 5, dans lequel la fibre de mesure (7) est équipée d'une jauge extensiométrique, d'un réseau de Bragg ou d'une cavité Fabry-Pérot.

7. Dispositif selon l'une quelconque des revendications 1 à 6, dans lequel ledit dispositif comprend au moins trois corps d'épreuve (5) disposés selon trois directions distinctes, un premier corps d'épreuve (5) s'étendant selon une première direction (X), un deuxième corps d'épreuve (5) s'étendant selon une deuxième direction (Y) perpendiculaire à la première direction (X) et un troisième corps d'épreuve (5) s'étendant selon une troisième direction (Z) perpendiculaire à la première direction (X) et à la deuxième direction (Y).

8. Dispositif selon la revendication 7, dans lequel ledit dispositif comprend un quatrième corps d'épreuve (5) s'étendant selon une quatrième direction (XY) appartenant à un premier plan (X;Y) comprenant la première direction (X) et la deuxième direction (Y),

et/ou un cinquième corps d'épreuve (5) s'étendant selon une cinquième direction (YZ) appartenant à un deuxième plan (Y;Z) comprenant la deuxième direction (Y) et la troisième direction (Z),

et/ou un sixième corps d'épreuve (5) s'étendant selon une sixième direction (XZ) appartenant à un troisième plan (X;Z) comprenant la première direction (X) et la troisième direction (Z).

9. Dispositif selon l'une quelconque des revendications 1 à 8, dans lequel chaque branche uniaxiale (31) du support (3) est reliée à au moins une autre branche et lesdites branches délimitent entre elles un espace intérieur de forme sensiblement cubique, et dans lequel la fibre de mesure (7) est continue et passe à l'intérieur de chacune des branches (31).

10. Dispositif selon la revendication 7 et la revendication 9, dans lequel au moins trois branches (31) parmi les branches (31) du support (3) comprennent respectivement le premier corps d'épreuve (5), le deuxième corps d'épreuve (5) et le troisième corps d'épreuve (5).

11. Dispositif selon la revendication 8 et la revendication 10, dans lequel au moins une des branches (31) du support (3) comprend le quatrième corps d'épreuve (5),

et/ou dans lequel au moins une des branches (31) du support comprend le cinquième corps d'épreuve (5),
et/ou dans lequel au moins une des branches (31) du support comprend le sixième corps d'épreuve (5),
chacune des branches (31) du support (3) comprenant un unique corps d'épreuve (5) au maximum.

12. Dispositif selon l'une quelconque des revendications 9 à 11, dans lequel au moins une branche parmi les branches (31) du support (3) est équipée d'une sonde de température (35) portée par la fibre de mesure (7).

13. Dispositif selon l'une quelconque des revendications 9 à 12, dans lequel le support (3) comprend au moins sept branches (31) et dans lequel la fibre de mesure (7) passant à l'intérieur de chacune desdites branches forme une boucle.

14. Structure mécanique (1) comprenant un dispositif de mesure selon l'une quelconque des revendications 1 à 13.

15. Procédé de mesure des déformations endogènes d'une structure (1) lors du passage de ladite structure d'une phase liquide à une phase solide, ledit procédé comprenant les étapes suivantes :

- Installer un dispositif de mesure selon l'une quelconque des revendications 1 à 13,
- Couler la structure en phase liquide autour du dispositif de mesure,
- Récupérer les mesures sur le système (9, 10, 11) du dispositif de mesure lors de la phase de solidification de la structure.

**Patentansprüche**

1. Vorrichtung zum Messen von endogenen Deformationen einer Struktur (1) während des Übergangs der Struktur von einer flüssigen Phase in eine feste Phase, die Vorrichtung umfassend:

- Probenkörper (5), von welchen jeder uniaxial ist und sich zwischen einem ersten Ende (5a) und einem zweiten Ende (5b) erstreckt, dazu eingerichtet, in der Struktur (1) eingebettet zu sein, und aus einem flexiblen homogenen Material mit bekannten mechanischen Eigenschaften bestehend,

**dadurch gekennzeichnet, dass** die Vorrichtung umfasst:

- einen Träger (3), welcher eine Mehrzahl von uniaxialen Zweigen (31) aufweist, wobei jeder der Probenkörper (5) einem der Zweige (31) des Trägers (3) zugeordnet ist,
- eine Deformation-Messfaser (7), welche an dem Innenraum der Probenkörper (5) derart angebracht ist, dass Deformationen von jedem der Probenkörper (5) auf die Messfaser (7) übertragen werden, wobei die Messfaser (7) an dem Innenraum der Mehrzahl von Zweigen (31) derart befestigt ist, dass die durch die Mehrzahl von Zweigen (31) erfahrenen Deformationen auf die Messfaser (7) übertragen werden, und
- ein System (9, 10, 11), welches mit der Messfaser (7) verbunden und dazu eingerichtet ist, Signale zu detektieren, welche von der Messfaser (7) stammen, welche Deformationen der Messfaser (7) repräsentieren, und die endogenen Deformationen ausgehend von wenigstens einem der detektierten Signale und den bekannten mechanischen Eigenschaften der Materialien des Probenkörpers (5) zu bestimmen,
- wobei jeder Probenkörper (5) eine Steifigkeit aufweist, welche zwischen 2 und 5 Gigapascal beträgt, während die Zweige (31) jeweils eine Steifigkeit aufweisen, welche zwischen 2 und 5 Gigapascal beträgt.

**2.** Vorrichtung nach Anspruch 1, wobei die Messfaser (7) eine optische Messfaser ist.

**3.** Vorrichtung nach einem der Ansprüche 1 bis 2, wobei in jedem Probenkörper (5) ein Körper (51) vorgesehen ist, welcher von wenigstens einem Kanal (6) durchbrochen ist, welcher sich longitudinal zwischen dem ersten Ende (5a) und dem zweiten Ende (5b) des Probenkörpers (5) erstreckt, wobei wenigstens ein Teil der Messfaser (7) an dem Innenraum des Kanals angeklebt ist.

**4.** Vorrichtung nach einem der Ansprüche 1 bis 2, wobei der Probenkörper (5) an wenigstens einem Teil der Messfaser (7) überformt ist.

**5.** Vorrichtung nach einem der Ansprüche 1 bis 4, wobei der wenigstens eine Probenkörper (5) wenigstens einen Zapfen (55) umfasst, welche sich radial bezüglich des Probenkörpers zwischen einem ersten Ende (55a), welches mit dem Probenkörper verbunden ist, und einem freien zweiten Ende (55b) erstreckt.

**6.** Vorrichtung nach einem der Ansprüche 1 bis 5, wobei die Messfaser (7) mit einem Dehnmessstreifen, einem Bragg-Gitter oder einem Fabry-Perot-Hohlraum ausgestattet ist.

**7.** Vorrichtung nach einem der Ansprüche 1 bis 6, wobei die Vorrichtung wenigstens drei Probenkörper (5) umfasst, welche entlang dreier unterschiedlicher Richtungen angeordnet sind, einen ersten Probenkörper (5), welcher sich entlang einer ersten Richtung (X) erstreckt, einen zweiten Probenkörper (5), welcher sich entlang einer zweiten Richtung (Y) senkrecht zu der ersten Richtung (X) erstreckt, und einen dritten Probenkörper (5), welcher sich entlang einer dritten Richtung (Z) senkrecht zu der ersten Richtung (X) und zu der zweiten Richtung (Y) erstreckt.

**8.** Vorrichtung nach Anspruch 7, wobei die Vorrichtung einen vierten Probenkörper (5) umfasst, welcher sich entlang einer vierten Richtung (XY) erstreckt, welche einer ersten Ebene (X;Y) angehört, welche die erste Richtung (X) und die zweite Richtung (Y) umfasst,

und/oder einen fünften Probenkörper (5), welcher sich entlang einer fünften Richtung (YZ) erstreckt, welche einer zweiten Ebene (Y;Z) angehört, welche die zweite Richtung (Y) und die dritten Richtung (Z) umfasst, und/oder einen sechsten Probenkörper (5), welcher sich entlang einer sechsten Richtung (XZ) erstreckt, welche einer dritten Ebene (X;Z) angehört, welche die erste Richtung (X) und die dritte Richtung (Z) umfasst.

**9.** Vorrichtung nach einem der Ansprüche 1 bis 8, wobei jeder unixiale Zweig (31) des Trägers (3) mit wenigstens einem anderen Zweig verbunden ist und die Zweige untereinander einen Innenraum von im Wesentlichen kubischer Form begrenzen, und wobei die Messfaser (7) durchgehend ist und durch den Innenraum von jedem der Zweige (31) verläuft.

**10.** Vorrichtung nach dem Anspruch 7 und dem Anspruch 9, wobei wenigstens drei Zweige (31) aus den Zweigen (31) des Trägers (3) jeweils den ersten Probenkörper (5), den zweiten Probenkörper (5) und den dritten Probenkörper (5) umfassen.

**11.** Vorrichtung nach dem Anspruch 8 und dem Anspruch 10, wobei wenigstens einer der Zweige (31) des Trägers (3) den vierten Probenkörper (5) umfasst, und/oder wobei wenigstens einer der Zweige (31) des Trägers den fünften Probenkörper (5) umfasst,

und/oder wobei wenigstens einer der Zweige (31) des Trägers den sechsten Probenkörper (5) umfasst, wobei jeder der Zweige (31) des Trägers (3) maximal einen einzelnen Probenkörper (5) umfasst.

**12.** Vorrichtung nach einem der Ansprüche 9 bis 11, wobei wenigstens ein Zweig aus den Zweigen (31) des Trägers (3) mit einer Temperatursonde (35) ausgestattet ist, welche von der Messfaser (7) getragen ist.

**13.** Vorrichtung nach einem der Ansprüche 9 bis 12, wobei der Träger (3) wenigstens sieben Zweige (31) umfasst, und wobei die Messfaser (7), welche in dem Innenraum von jedem der Zweige verläuft, eine Schleife bildet.

**14.** Mechanische Struktur (1), umfassend eine Vorrichtung zum Messen nach einem der Ansprüche 1 bis 13.

**15.** Verfahren zum Messen von endogenen Deformationen einer Struktur (1) während eines Übergangs der Struktur von einer flüssigen Phase in eine feste Phase, wobei das Verfahren die folgenden Schritte umfasst:

- Installieren einer Vorrichtung zum Messen nach einem der Ansprüche 1 bis 13,
- Gießen der Struktur in flüssiger Phase um die Vorrichtung zum Messen herum,
- Aufnehmen der Messungen durch das System (9, 10, 11) der Vorrichtung zum Messen während der Phase der Verfestigung der Struktur.

**Claims**

1. Device for measuring the endogenous deformations of a structure (1) during the transition of said structure from a liquid phase to a solid phase, the device comprising:

   - test bodies (5), each uniaxial and extending between a first end (5a) and a second end (5b), being suitable for embedding in the structure (1) and made of homogeneous flexible material with known mechanical properties,
   - a support (3) having a plurality of uniaxial legs (31), each of the test bodies (5) belonging to one of these legs (31) of the support (3),
   - a deformation measurement fiber (7) attached to inside the test bodies (5), such that deformations of each of the test bodies (5) are transmitted to the measurement fiber (7), said measurement fiber (7) being fixed inside the plurality of legs (31) such that the deformations undergone by the plurality of legs (31) are transmitted to the measurement fiber (7), and
   - a system (9, 10, 11) connected to the measurement fiber (7) and suitable for detecting signals from the measurement fiber (7) that are representative of the deformations of the measurement fiber (7) and for determining the endogenous deformations from at least one of the detected signals and from known mechanical properties of the materials of the test body (5),

   each test body (5) having a rigidity comprised between 2 and 5 gigapascals, knowing that said legs (31) have each a rigidity comprised between 2 and 5 gigapascals.

2. Device according to claim 1, wherein the measurement fiber (7) is an optical measurement fiber.

3. Device according to any one of claims 1 to 2, wherein in each test body (5) there is a body (51) pierced by at least one channel (6) which extends longitudinally between the first end (5a) and the second end (5b) of the test body (5), at least a portion of the measurement fiber (7) being glued to the interior of said channel.

4. Device according to any one of claims 1 to 2, wherein the test body (5) is overmolded on at least a portion of the measurement fiber (7).

5. Device according to any one of claims 1 to 4, wherein the at least one test body (5) comprises at least one lug (55) extending radially relative to said test body, between a first end (55a) integral to said test body and a second free end (55b).

6. Device according to any one of claims 1 to 5, wherein the measurement fiber (7) is equipped with a strain gauge, a Bragg grating, or Fabry-Perot cavity.

7. Device according to any one of claims 1 to 6, wherein said device comprises at least three test bodies (5) arranged in three distinct directions, a first test body (5) extending in a first direction (X), a second test body (5) extending in a second direction (Y) perpendicular to the first direction (X), and a third test body (5) extending in a third direction (Z) perpendicular to the first direction (X) and second direction (Y).

8. Device according to claim 7, wherein said device comprises a fourth test body (5) extending in a fourth direction (XY) that lies within a first plane (X;Y) comprising the first direction (X) and second direction (Y),

   and/or a fifth test body (5) extending in a fifth direction (YZ) that lies within a second plane (Y;Z) comprising the second direction (Y) and third direction (Z),
   and/or a sixth test body (5) extending in a sixth direction (XZ) that lies within a third plane (X;Z) comprising the first direction (X) and third direction (Z).

9. Device according to any one of claims 1 to 8, wherein each uniaxial leg (31) of the support (3) is connected to at least one other leg and said legs define between them an internal space of substantially cubic shape, and wherein the measurement fiber (7) is continuous and runs through each of the legs (31).

10. Device according to claim 7 and claim 9, wherein at least three legs (31) among the legs (31) of the support (3) respectively comprise the first test body (5), the second test body (5), and the third test body (5).

11. Device according to claim 8 and claim 10, wherein at least one leg (31) of the support (3) comprises the fourth test body (5),

    and/or wherein at least one leg (31) of the support comprises the fifth test body (5),
    and/or wherein at least one leg (31) of the support comprises the sixth test body (5),
    each of the legs (31) of the support (3) comprising at most one test body (5).

12. Device according to any one of claims 9 to 11, wherein at least one leg among the legs (31) of the support (3) is equipped with a temperature sensor (35) carried by the measurement fiber (7).

13. Device according to any one of claims 9 to 12, wherein the support (3) comprises at least seven legs (31) and wherein the measurement fiber (7) which runs through each of said legs forms a loop.

14. Mechanical structure (1) comprising a measurement device according to any one of claims 1 to 13.

15. Method for measuring endogenous deformations of a structure (1) during the transition of said structure from a liquid phase to a solid phase, said method comprising the following steps:

   - installing a measurement device according to any one of claims 1 to 13,
   - pouring the liquid-phase structure around the measurement device,
   - collecting measurements on the system (9, 10, 11) from the measurement device during the solidification phase of the structure.

FIG. 1

FIG. 2

FIG. 3

FIG. 4

FIG. 5

FIG. 6a

FIG. 6b

**EP 3 449 208 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2855210
- WO 2006127034 A
- WO 2014140496 A1

**Littérature non-brevet citée dans la description**

- **HUA, C. ; ACKER, P. ; EHRLACHER, A.** Analyses and models of the autogeneous shrinkage of hardening cement paste. *Cernent and Concrete Research,* 1995, vol. 25, 1457-1468
- **BAROGHEL-BOUNY V. ; KHEIRBEK A.** Effect of mix parameters on autogenous deformations of cement paste - Microstructural interpretation. *Concrete Science Engineering,* 2001, vol. 3 (9), 23-38
- **LEE H.K. ; LEE K.M. ; KIM B.G.** Autogenous shrinkage of high-performance concrete containing fly ash. *Magazine of Concrete Research,* Décembre 2003, vol. 55 (6), 507-515